# EUROPEAN PATENT APPLICATION

(11) **EP 3 831 612 A1**
(43) Date of publication of application: **09.06.2021**
(21) Application number: 20210236.4
(22) Date of filing: 27.11.2020
(51) Int. Cl.: B41M 7/00, B41M 5/00, C09D 11/38, C09D 11/101

(54) **INKJET PRINTING METHOD AND INKJET PRINTING APPARATUS**

(30) Priority: 29.11.2019 JP 2019216179; 29.11.2019 JP 2019216632; 24.08.2020 JP 2020140989; 04.09.2020 JP 2020149197
(71) Applicant: Ricoh Company, Ltd., Tokyo 143-8555 (JP)
(72) Inventor: FUJII, Hidetoshi, Tokyo, 143-8555 (JP)
(74) Representative: Kato, Yumiko

(57) **Abstract**

An inkjet printing method including: discharging an ink onto a print medium, where the ink contains a polymerizable group-containing dispersion and a polymerization initiator; after the discharging, irradiating the ink with active energy rays, where the ink is discharged on the print medium; and after the irradiating, drying the ink with heat, where the ink is irradiated with the active energy rays.

## Description

### BACKGROUND OF THE INVENTION

### Field of the Invention

The present disclosure relates to an inkjet printing method and an inkjet printing apparatus.

### Description of the Related Art

In recent years, inkjet printing methods have been more and more commonly used because they can easily print color images and have lower running costs, for example.

Inks used for inkjet printing are, for example, aqueous dye inks containing dyes dissolved in aqueous media and solvent-based inks containing oil-soluble dyes dissolved in organic solvents. In general, in offices and for home use, inks containing water-soluble dyes dissolved in water or dissolved in mixtures of water and water-soluble solvents are used from an environmental and safety point of view.

Also, aqueous pigment inks have attracted attention that contain pigments formed into particles and dispersed in water. Inkjet printing inks containing water-dispersible pigments are known to be excellent in waterproofness and lightfastness.

In recent years, moreover, an aqueous pigment ink has been proposed that contains water as a main ingredient and a pigment ink containing a radical-reactive polymer material having an acrylate structure as a partial structure thereof, whereby an ink film having scratch resistance can be formed through radical reaction (see, for example, Japanese Unexamined Patent Application No. 2018-83352).

Japanese Unexamined Patent Application No. 2001-115067 discloses an ink composition containing an aqueous medium, and a pigment, photoreactive polymer particles, a water-soluble monomer, and a photopolymerization initiator which are in the aqueous medium, the ink composition having excellent weatherability, waterproofness, moisture resistance, and chemical resistance, and also having excellent fixability and surface drying property.

The present disclosure has an object to provide an inkjet printing method that can provide a cured product excellent in scratch resistance and beading suppression.

### SUMMARY OF THE INVENTION

According to an aspect of the present disclosure, an inkjet printing method includes: an ink discharging step of discharging an ink onto a print medium, where the ink contains a polymerizable group-containing dispersion and a polymerization initiator; after the ink discharging step, an active-energy-ray irradiating step of irradiating the ink with active energy rays, where the ink is discharged on the print medium; and after the active-energy-ray irradiating step, a drying step of drying the ink with heat, where the ink is irradiated with the active energy rays.

According to the present disclosure, it is possible to provide an inkjet printing method that can achieve excellent discharge ability and provide a cured product excellent in scratch resistance and beading suppression.

### BRIEF DESCRIPTION OF THE DRAWINGS

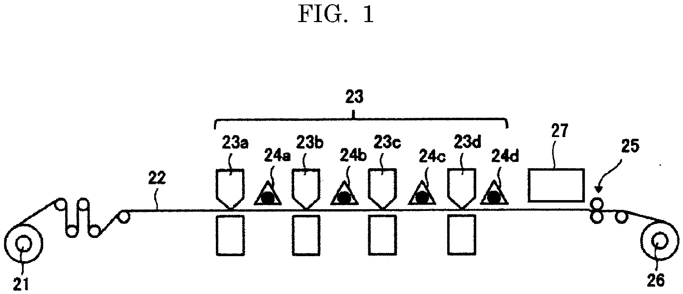

FIG. 1 is a schematic view illustrating one example of an image forming apparatus in the present disclosure.

### DETAILED DESCRIPTION OF THE INVENTION

The present inventors studied curable compositions having excellent scratch resistance and beading suppression, and have obtained the following finding.

Traditional inks containing water-soluble dyes form printed images having poor waterproofness and lightfastness.

Also, traditional aqueous pigment inks require a long period of time until drying of the inks when printed on non-absorbable print media or poorly-absorbable print media. This causes coalescence of ink droplets on the print media before fixation thereon, resulting in a drop in image quality (beading).

Means used for solving the above problems is a method of coating the surface of a recording medium with a pre-coat liquid that reacts with an ink pigment to aggregate therewith.

In a method of drying an ink and then irradiating the ink with active energy rays, when ink droplets land on media, the ink is weakly pined (fastened) on the media. In this case, rapid application of heat leads to a rapid drop in the viscosity of the ink droplets with heat, resulting in spread of the ink droplets to bleed. In addition to the application of heat, usually, there is need to perform a step of blowing air in order to increase drying efficiency and suppress an increase in the temperature of media, and this air causes the ink droplets to flow.

Under such circumstances, the present inventors have found that in an inkjet printing method using an ink containing a polymerizable group-containing dispersion and a polymerization initiator, better beading resistance and better scratch resistance are achieved even without coating of a pre-coat liquid by discharging the ink on a print medium followed by irradiation of active energy rays and further drying with heat. Irradiating the ink droplets with active energy rays after the ink droplets land on media and before drying causes binding between the polymerizable groups on the surfaces of the resin particles, which in turn bind together to form larger particles. When the resin particles aggregate in this manner and precipitate in the media, the ink droplets do not flow with heat or air blow in the subsequent drying step because the resin particles already precipitate and are fixed in the media.

The present inventors have further obtained the finding that by irradiating active energy rays and drying with heat within a period of from 0.2 sec to 1.0 sec after the ink discharging step, beading can be suppressed even without coating of a pre-coat liquid. (Ink)

The ink used in the present disclosure (hereinafter may also be referred to as an active-energy-ray curable composition) contains a polymerizable group-containing dispersion and a polymerization initiator, and if necessary contains other ingredients. Examples of the other ingredients include organic solvents, water, resins, and additives.

### <Polymerizable material>

A polymerizable material contains a polymerizable group-containing dispersion and if necessary may contain other ingredients.

The polymerizable group is preferably at least one selected from the group consisting of an acrylate group, a methacrylate group, and an acrylamide group.

Also, other polymerizable materials include amine compounds and polymerizable monomers.

### <<Acrylate group-containing dispersion>>

An acrylate group-containing dispersion is particles having reactivity that is able to perform polymerization reaction with other particles by the action of stimuli such as ultraviolet rays and heat. When the acrylate group-containing dispersion is incorporated into a curable composition, a cured film obtained by curing the curable composition can be excellent in smoothness (glossiness), flexibility, and scratch resistance.

The acrylate group-containing dispersion is not particularly limited and may be appropriately selected depending on the intended purpose. Examples thereof include a dispersion containing a water-dispersible acrylate group. Examples of the dispersion containing a water-dispersible acrylate group include reactive polyurethane particles. Examples of the reactive polyurethane particles include (meth)acrylated polyurethane particles.

The (meth)acrylated polyurethane particles used may be, for example, commercially available products. Examples of the commercially available products include UCECOAT (registered trademark) 6558 (available from DAICEL-ALLNEX LTD.), UCECOAT (registered trademark) 6559 (available from DAICEL-ALLNEX LTD.), UCECOAT (registered trademark) 7571 (available from DAICEL-ALLNEX LTD.), EBECRYL (registered trademark) 2002 (available from DAICEL-ALLNEX LTD.), EBECRYL (registered trademark) 2003 (available from DAICEL-ALLNEX LTD.), UCECOAT (registered trademark) 7710 (available from DAICEL-ALLNEX LTD.), UCECOAT (registered trademark) 7200 (available from DAICEL-ALLNEX LTD.), UCECOAT (registered trademark) 7655 (available from DAICEL-ALLNEX LTD.), UCECOAT (registered trademark) 7788 (available from DAICEL-ALLNEX LTD.), UCECOAT (registered trademark) 7849 (available from DAICEL-ALLNEX LTD.), NEORADR (registered trademark) 440 (available from Avecia Inc.), NEORADR (registered trademark) 441 (available from Avecia Inc.), NEORADR (registered trademark) 447 (available from Avecia Inc.), NEORADR (registered trademark) 448 (available from Avecia Inc.), BAYHYDROL (registered trademark) UV2317 (available from COVESTRO Ltd.), BAYHYDROL (registered trademark) UV VP LS2348 (available from COVESTRO Ltd.), LUX (registered trademark) 430 (available from ALBERDING BOLEY, Inc.), LUX (registered trademark) 399 (available from ALBERDING BOLEY, Inc.), LUX (registered trademark) 484 (available from ALBERDING BOLEY, Inc.), LAROMER (registered trademark) LR8949 (available from BASF Ltd.), LAROMER (registered trademark) LR8983 (available from BASF Ltd.), LAROMER (registered trademark) PE22WN (available from BASF Ltd.), LAROMER (registered trademark) PE55WN (available from BASF Ltd.), and LAROMER (registered trademark) UA9060 (available from BASF Ltd.). Among them, LAROMER (registered trademark) LR8949 (available from BASF Ltd.) and LAROMER (registered trademark) LR8983 (available from BASF Ltd.) are preferable. Use of LAROMER (registered trademark) LR8949 (available from BASF Ltd.) or LAROMER (registered trademark) LR8983 (available from BASF Ltd.) can increase scratch resistance.

The proportion of the acrylate group-containing dispersion as a solid portion is preferably 2% by mass or more but 12% by mass or less, more preferably 6% by mass or more but 12% by mass or less, relative to the total amount of the ink. When the proportion of the acrylate group-containing dispersion is 2% by mass or more but 12% by mass or less, it is possible to increase scratch resistance.

### <<Polymerizable monomer>>

The polymerizable monomer is not particularly limited and may be appropriately selected depending on the intended purpose as long as it contains a reactive substituent that can perform polymerization reaction.

Examples of the polymerizable monomer include (meth)acrylate, (meth)acrylamide, and vinyl ether, which can be used in combination. Specific examples thereof include ethylene glycol di(meth)acrylate, hydroxypivalic acid neopentyl glycol di(meth)acrylate, γ-butyrolactone acrylate, isobornyl (meth)acrylate, formalized trimethylolpropane mono(meth)acrylate, polytetramethylene glycol di(meth)acrylate, trimethylolpropane (meth)acrylic acid benzoic acid ester, triethylene glycol di(meth)acrylate, tetraethylene glycol di(meth)acrylate, polyethylene glycol diacrylate [CH₂=CH-CO-(OC₂H₄)n-OCOCH=CH₂ (n≒4)], polyethylene glycol diacrylate [CH₂=CH-CO-(OC₂H₄)n-OCOCH=CH₂ (n≒9)], polyethylene glycol diacrylate [CH₂=CH-CO-(OC₂H₄)n-OCOCH=CH₂ (n≒14)], polyethylene glycol diacrylate [CH₂=CH-CO-(OC₂H₄)n-OCOCH=CH₂ (n≒23)], dipropylene glycol di(meth)acrylate, tripropylene glycol di(meth)acrylate, polypropylene glycol dimethacrylate [CH₂=C(CH₃)-CO-(OC₃H₆)n-OCOC(CH₃)=CH₂ (n≒7)], 1,3-butanediol di(meth)acrylate, 1,4-butanediol diacrylate, 1,6-hexanediol di(meth)acrylate, 1,9-nonanediol di(meth)acrylate, neopentyl glycol diacrylate, tricyclodecane dimethanol diacrylate, propylene oxide-modified bisphenol A di(meth)acrylate, polyethylene glycol di(meth)acrylate, dipentaerythritol hexa(meth)acrylate, (meth)acryloylmorpholine, propylene oxide-modified tetramethylolmethane tetra(meth)acrylate, dipentaerythritol hydroxypenta(meth)acrylate, caprolactone-modified dipentaerythritol hydroxypenta(meth)acrylate, ditrimethylolpropane tetra(meth)acrylate, pentaerythritol tetra(meth)acrylate, trimethylolpropane triacrylate, ethylene oxide-modified trimethylolpropane tri(meth)acrylate, propylene oxide-modified trimethylolpropane tri(meth)acrylate, caprolactone-modified trimethylolpropane tri(meth)acrylate, pentaerythritol tri(meth)acrylate, tris(2-hydroxyethyl)isocyanurate tri(meth)acrylate, neopentyl glycol diacrylate, ethoxylated neopentyl glycol di(meth)acrylate, propylene oxide-modified neopentyl glycol di(meth)acrylate, propylene oxide-modified glyceryl tri(meth)acrylate, polyester di(meth)acrylate, polyester tri(meth)acrylate, polyester tetra(meth)acrylate, polyester penta(meth)acrylate, polyester poly(meth)acrylate, polyurethane di(meth)acrylate, polyurethane tri(meth)acrylate, polyurethane tetra(meth)acrylate, polyurethane penta(meth)acrylate, polyurethane poly(meth)acrylate, 4-hydroxybutyl acrylate, 2-hydroxypropyl(meth)acrylamide, N-vinylcaprolactam, N-vinylpyrrolidone, N-vinylformamide, cyclohexanedimethanol monovinyl ether, cyclohexanedimethanol divinyl ether, hydroxyethyl vinyl ether, diethylene glycol monovinyl ether, diethylene glycol divinyl ether, dicyclopentadiene vinyl ether, tricyclodecane vinyl ether, benzyl vinyl ether, and ethyloxetanemethyl vinyl ether. The polymerizable monomer to be added may be appropriately selected from the above-listed monomers in consideration of, for example, its solubility in water serving as a dispersion medium, the intended viscosity of a composition, and the thickness of a cured film (coat film) on the substrate. In terms of the solubility in water, acryloylmorpholine, dimethylaminopropylacrylamide, polyethylene glycol, or polypropylene glycol-modified acrylate is preferable. These may be used alone or in combination.

### <Polymerization Initiator>

The active-energy-ray curable composition of the present disclosure optionally contains a polymerization initiator. The polymerization initiator produces active species such as a radical or a cation upon application of energy of an active energy ray and initiates polymerization of a polymerizable compound (monomer or oligomer). As the polymerization initiator, it is suitable to use a known radical polymerization initiator, cation polymerization initiator, base producing agent, or a combination thereof. Of these, a radical polymerization initiator is preferable. Moreover, the polymerization initiator preferably accounts for 0.1 percent by weight to 2 percent by weight of the total content of the composition (100 percent by weight) to obtain sufficient curing speed.

Specific examples of the radical polymerization initiators include, but are not limited to, aromatic ketones, acylphosphine oxide compounds, aromatic onium chlorides, organic peroxides, thio compounds (thioxanthone compounds, thiophenyl group containing compounds, etc.), hexaaryl biimidazole compounds, ketoxime ester compounds, borate compounds, azinium compounds, metallocene compounds, active ester compounds, compounds having a carbon halogen bond(s), and alkyl amine compounds.

In addition, a polymerization accelerator (sensitizer) is optionally used together with the polymerization initiator. The polymerization accelerator is not particularly limited. Preferred examples thereof include, but are not limited to, amines such as trimethylamine, methyl dimethanol amine, triethanol amine, p-diethylamino acetophenone, p-dimethyl amino ethylbenzoate, p-dimethyl amino benzoate-2-ethylhexyl, N,N-dimethyl benzylamine and 4,4'-bis(diethylamino)benzophenone. The content thereof is determined depending on the identity (type) of the polymerization initiator and the content thereof.

A water-soluble polymerization initiator is particularly preferable, and a photopolymerization initiator having a hydroxyl group in a molecule thereof is preferable. A preferable photopolymerization initiator is an alkylphenone-based molecular skeleton or a monoacylphosphine oxide-based molecular skeleton. Particularly preferable examples of the alkylphenone -based molecular skeleton include 2-hydroxy-2-methyl-1-phenylpropanone and 1-[4-(2-hydroxyethoxyl)-phenyl]-2-hydroxy-methylpropanone. Particularly preferable examples of the acylphosphine oxide-based molecular skeleton include ionized compounds and EO adducts of bis(2,4,6-trimethylbenzoyl)phenylphosphine oxide.

### <<Amine compound>>

In the present disclosure, an amine compound may be added to the ink.

The amine compound may be added to the ink as a pH regulator.

The amine compound to be added is preferably an amine compound having a boiling point of 120 degrees C or higher but 200 degrees C or lower and a molecular weight of 100 or lower. More preferably, when the amount of the resin particles (on a mass basis) in the ink is regarded as 1, the amount of the amine compound is 0.01 or more but 0.1 or less. This realizes much better maintenance performance.

The amine compound may be any of primary, secondary, tertiary, and quaternary amines, and salts thereof. The quaternary amine refers to a compound where four alkyl groups are substituted on a nitrogen atom.

The amine compound is preferably a compound represented by Formula (I) or Formula (II) below. 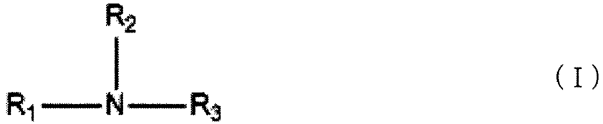 [In the formula, R₁, R₂, and R₃ each represent a hydrogen atom, an alkoxy group having from 1 through 4 carbon atoms, an alkyl group having from 1 through 6 carbon atoms, or a hydroxyethyl group, provided that all of R₁, R₂, and R₃ are not hydrogen atoms at the same time.] 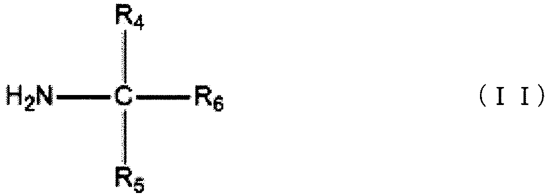 [In the formula, R₄, R₅, and R₆ each represent a hydrogen atom, a methyl group, an ethyl group, a hydroxymethyl group, or an alkyl group having from 1 through 4 carbon atoms.]

Examples of the compound represented by the above Formula (I) and Formula (II) include 1-amino-2-propanol, 3-amino-1-propanol, N-methylethanolamine, N,N-dimethylethanolamine, and 1-amino-2-methylpropanol.

The amount of the amine compound in the ink is not particularly limited. From the viewpoint of pH adjustment of the ink, the amount thereof is preferably from 0.01% by mass through 5% by mass, particularly preferably from 0.05% by mass through 2% by mass.

Also, the amine compound contained in the ink may be combinations of the above amine compounds with other amine compounds.

### <Organic Solvent>

There is no specific limitation on the type of the organic solvent used in the present disclosure. For example, water-soluble organic solvents are suitable. Specific examples thereof include, but are not limited to, polyols, ethers such as polyol alkylethers and polyol arylethers, nitrogen-containing heterocyclic compounds, amides, amines, and sulfur-containing compounds.

Specific examples of the water-soluble organic solvents include, but are not limited to, polyols such as ethylene glycol, diethylene glycol, 1,2-propanediol, 1,3-propanediol, 1,2-butanediol, 1,3-butanediol, 1,4-butanediol, 2,3-butanediol, 3-methyl-1,3-butanediol, triethylene glycol, polyethylene glycol, polypropylene glycol, 1,2-pentanediol, 1,3-pentanediol, 1,4-pentanediol, 2,4-pentanediol, 1,5-pentanediol, 1,2-hexanediol, 1,6-hexanediol, 1,3-hexanediol, 2,5-hexanediol, 1,5-hexanediol, glycerin, 1,2,6-hexanetriol, 2-ethyl-1,3-hexanediol, ethyl-1,2,4-butanetriol, 1,2,3-butanetriol, 2,2,4-trimethyl-1,3-pentanediol, and petriol; polyol alkylethers such as ethylene glycol monoethylether, ethylene glycol monobutylether, diethylene glycol monomethylether, diethylene glycol monoethylether, diethylene glycol monobutylether, tetraethylene glycol monomethylether, and propylene glycol monoethylether; polyol arylethers such as ethylene glycol monophenylether and ethylene glycol monobenzylether; nitrogen-containing heterocyclic compounds such as 2-pyrolidone, N-methyl-2-pyrolidone, N-hydroxyethyl-2-pyrolidone, 1,3-dimethyl-2-imidazolidinone, 3-caprolactam, and y-butyrolactone; amides such as formamide, N-methylformamide, N,N-dimethylformamide, 3-methoxy-N,N-dimethyl propioneamide, and 3-buthoxy-N,N-dimethyl propioneamide; amines such as monoethanolamine, diethanolamine, and triethylamine; sulfur-containing compounds such as dimethyl sulfoxide, sulfolane, and thiodiethanol; propylene carbonate, and ethylene carbonate.

Since the water-soluble organic solvent serves as a humectant and also imparts a good drying property, it is preferable to use an organic solvent having a boiling point of 250 degrees C or lower.

Polyol compounds having eight or more carbon atoms and glycol ether compounds are also suitable. Specific examples of the polyol compounds having eight or more carbon atoms include, but are not limited to, 2-ethyl-1,3-hexanediol and 2,2,4-trimethyl-1,3-pentanediol.

Specific examples of the glycolether compounds include, but are not limited to, polyol alkylethers such as ethylene glycol monoethylether, ethylene glycol monobutylether, diethylene glycol monomethylether, diethyleneglycol monoethylether, diethyleneglycol monobutylether, tetraethylene glycol monomethylether, propylene glycol monoethylether; and polyol arylethers such as ethyleneglycol monophenylether and ethyleneglycol monobenzylether.

The polyol compounds having eight or more carbon atoms and glycolether compounds enhance the permeability of ink when paper is used as a print medium.

The proportion of the organic solvent in ink has no particular limit and can be suitably selected to suit a particular application. In terms of the drying property and discharging reliability of the ink, the proportion is preferably from 10 to 60 percent by mass and more preferably from 20 to 60 percent by mass.

### <Water>

The proportion of the water in an ink curable composition has no particular limit and can be suitably selected to suit a particular application. In terms of the drying property and discharging reliability of the ink curable composition, the proportion is preferably from 40 to 70 percent by mass and more preferably from 45 to 60 percent by mass. When the proportion of the water is 40 percent by mass or more, the viscosity of the ink becomes suitable for discharging. When the proportion of the water is 70 percent by mass or less, the proportion of the solid portion becomes appropriate, which makes it possible to obtain a necessary image density.

### <Colorant>

The composition of the present disclosure may contain a colorant. As the colorant, various pigments and dyes may be used that impart black, white, magenta, cyan, yellow, green, orange, and gloss colors such as gold and silver, depending on the intended purpose of the composition and requisite properties thereof. A content of the colorant in the composition is not particularly limited, and may be appropriately determined considering, for example, a desired color density and dispersibility of the colorant in the composition. However, it is preferably from 0.1% by mass to 20% by mass relative to the total mass (100% by mass) of the composition. Incidentally, the active-energy-ray curable composition of the present disclosure does not necessarily contain a colorant but can be clear and colorless. In such a case, for example, such a clear and colorless composition is good for an overcoating layer to protect an image.

The pigment can be either inorganic or organic, and two or more of the pigments can be used in combination.

Specific examples of the inorganic pigments include, but are not limited to, carbon blacks (C.I. Pigment Black 7) such as furnace black, lamp black, acetylene black, and channel black, iron oxides, and titanium oxides.

Specific examples of the organic pigments include, but are not limited to, azo pigments such as insoluble azo pigments, condensed azo pigments, azo lakes, and chelate azo pigments, polycyclic pigments such as phthalocyanine pigments, perylene pigments, perinone pigments, anthraquinone pigments, quinacridone pigments, dioxazine pigments, thioindigo pigments, isoindolinone pigments, and quinophthalone pigments, dye chelates (e.g., basic dye chelates, acid dye chelates), dye lakes (e.g., basic dye lakes, acid dye lakes), nitro pigments, nitroso pigments, aniline black, and daylight fluorescent pigments.

In addition, a dispersant is optionally added to enhance the dispersibility of pigment. The dispersant has no particular limit and can be, for example, polymer dispersants conventionally used to prepare pigment dispersion (material).

The dyes include, for example, acidic dyes, direct dyes, reactive dyes, basic dyes, and combinations thereof.

### <Pigment Dispersion>

The ink can be obtained by mixing a pigment with materials such as water and organic solvent. It is also possible to mix a pigment with water, a dispersant, etc., first to prepare a pigment dispersion and thereafter mix the pigment dispersion with materials such as water and organic solvent to manufacture ink.

The pigment dispersion is obtained by mixing and dispersing water, pigment, pigment dispersant, and other optional components and adjusting the particle size. It is good to use a dispersing device for dispersion.

The particle diameter of the pigment in the pigment dispersion has no particular limit. For example, the maximum frequency in the maximum number conversion is preferably from 20 to 500 nm and more preferably from 20 to 150 nm to improve dispersion stability of the pigment and ameliorate the discharging stability and image quality such as image density. The particle diameter of the pigment can be measured using a particle size analyzer (Nanotrac Wave-UT151, manufactured by MicrotracBEL Corp).

In addition, the proportion of the pigment in the pigment dispersion is not particularly limited and can be suitably selected to suit a particular application. In terms of improving discharging stability and image density, the content is preferably from 0.1 to 50 percent by mass and more preferably from 0.1 to 30 percent by mass.

During the production, coarse particles are optionally filtered off with a filter, a centrifuge, etc. preferably followed by degassing.

### <Resin>

The type of the resin contained in the ink has no particular limit. Specific examples thereof include, but are not limited to, urethane resins, polyester resins, acrylic-based resins, vinyl acetate-based resins, styrene-based resins, butadiene-based resins, styrene-butadiene-based resins, vinylchloride-based resins, acrylic styrene-based resins, and acrylic silicone-based resins.

Particles of such resins may be also used. It is possible to mix a resin emulsion in which the resin particles are dispersed in water serving as a dispersion medium with materials such as a coloring agent and an organic solvent to obtain ink. The resin particle can be synthesized or is available on the market. It is possible to synthesize the resin particle or obtain from market. These can be used alone or in combination of the resin particles.

The volume average particle diameter of the resin particle is not particularly limited and can be suitably selected to suit to a particular application. The volume average particle diameter is preferably from 10 to 1,000 nm, more preferably from 10 to 200 nm, and furthermore preferably from 10 to 100 nm to obtain good fixability and image hardness.

The volume average particle diameter can be measured by using a particle size analyzer (Nanotrac Wave-UT151, manufactured by MicrotracBEL Corp.).

The proportion of the resin is not particularly limited and can be suitably selected to suit to a particular application. In terms of fixability and storage stability of ink, it is preferably from 1 to 30 percent by mass and more preferably from 5 to 20 percent by mass to the total content of the ink.

The particle diameter of the solid portion in ink has no particular limit. For example, the maximum frequency in the maximum number conversion is preferably from 20 to 1,000 and more preferably from 20 to 150 nm to ameliorate the discharging stability and image quality such as image density. The solid portion includes resin particles, particles of pigments, etc. The particle diameter of the solid portion can be measured by using a particle size analyzer (Nanotrac Wave-UT151, manufactured by MicrotracBEL Corp).

### <Additive>

Ink may further optionally contain a surfactant, a defoaming agent, a preservative and fungicide, a corrosion inhibitor, a pH regulator, etc.

### <Surfactant>

Examples of the surfactant are silicone-based surfactants, fluorosurfactants, amphoteric surfactants, nonionic surfactants, anionic surfactants, etc.

The silicone-based surfactant has no specific limit and can be suitably selected to suit to a particular application.

Of these, preferred are silicone-based surfactants which are not decomposed even in a high pH environment. Specific examples thereof include, but are not limited to, side-chain-modified polydimethylsiloxane, both end-modified polydimethylsiloxane, one-end-modified polydimethylsiloxane, and side-chain-both-end-modified polydimethylsiloxane. A silicone-based surfactant having a polyoxyethylene group or a polyoxyethylene polyoxypropylene group is particularly preferable because such an agent demonstrates good characteristics as an aqueous surfactant. It is possible to use a polyether-modified silicone-based surfactant as the silicone-based surfactant. A specific example thereof is a compound in which a polyalkylene oxide structure is introduced into the side chain of the Si site of dimethyl silooxane.

Specific examples of the fluoro surfactants include, but are not limited to, perfluoroalkyl sulfonic acid compounds, perfluoroalkyl carboxylic acid compounds, perfluoroalkyl phosphoric acid ester compounds, adducts of perfluoroalkyl ethylene oxide, and polyoxyalkylene ether polymer compounds having a perfluoroalkyl ether group in its side chain. These are particularly preferable because they do not foam easily. Specific examples of the perfluoroalkyl sulfonic acid compounds include, but are not limited to, perfluoroalkyl sulfonic acid and salts of perfluoroalkyl sulfonic acid. Specific examples of the perfluoroalkyl carboxylic acid compounds include, but are not limited to, perfluoroalkyl carboxylic acid and salts of perfluoroalkyl carboxylic acid. Specific examples of the polyoxyalkylene ether polymer compounds having a perfluoroalkyl ether group in its side chain include, but are not limited to, sulfuric acid ester salts of polyoxyalkylene ether polymer having a perfluoroalkyl ether group in its side chain and salts of polyoxyalkylene ether polymers having a perfluoroalkyl ether group in its side chain. Counter ions of salts in these fluorine-based surfactants are, for example, Li, Na, K, NH₄, NH₃CH₂CH₂OH, NH₂(CH₂CH₂OH)₂, and NH(CH₂CH₂OH)₃.

Specific examples of the amphoteric surfactants include, but are not limited to, lauryl aminopropionic acid salts, lauryl dimethyl betaine, stearyl dimethyl betaine, and lauryl dihydroxyethyl betaine.

Specific examples of the nonionic surfactants include, but are not limited to, polyoxyethylene alkyl phenyl ethers, polyoxyethylene alkyl esters, polyoxyethylene alkyl amines, polyoxyethylene alkyl amides, polyoxyethylene propylene block polymers, sorbitan aliphatic acid esters, polyoxyethylene sorbitan aliphatic acid esters, and adducts of acetylene alcohol with ethylene oxides, etc.

Specific examples of the anionic surfactants include, but are not limited to, polyoxyethylene alkyl ether acetates, dodecyl benzene sulfonates, laurates, and polyoxyethylene alkyl ether sulfates.

These can be used alone or in combination.

The silicone-based surfactants has no particular limit. Specific examples thereof include, but are not limited to, side-chain-modified polydimethyl siloxane, both end-modified polydimethylsiloxane, one-end-modified polydimethylsiloxane, and side-chain-both-end-modified polydimethylsiloxane. In particular, a polyether-modified silicone-based surfactant having a polyoxyethylene group or a polyoxyethylene polyoxypropylene group is particularly preferable because such a surfactant demonstrates good characteristics as an aqueous surfactant.

Any suitably synthesized surfactant and any product thereof available on the market is suitable. Products available on the market are obtained from Byc Chemie Japan Co., Ltd., Shin-Etsu Silicone Co., Ltd., Dow Corning Toray Co., Ltd., etc., NIHON EMULSION Co., Ltd., Kyoeisha Chemical Co., Ltd., etc.

The polyether-modified silicon-containing surfactant has no particular limit. For example, a compound in which the polyalkylene oxide structure represented by the following Chemical structure S-1 is introduced into the side chain of the Si site of dimethyl polysiloxane.

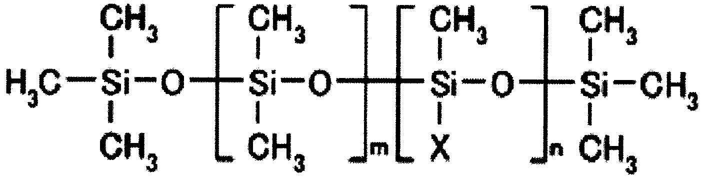

X = -R(C₂H₄O)ₐ(C₃H₆O)_{b}R' Chemical structure S-1

In the Chemical structure S-1, "m", "n", "a", and "b" each, respectively represent integers, R represents an alkylene group, and R' represents an alkyl group.

Specific examples of polyether-modified silicone-based surfactants include, but are not limited to, KF-618, KF-642, and KF-643 (all manufactured by Shin-Etsu Chemical Co., Ltd.), EMALEX-SS-5602 and SS-1906EX (both manufactured by NIHON EMULSION Co., Ltd.), FZ-2105, FZ-2118, FZ-2154, FZ-2161, FZ-2162, FZ-2163, and FZ-2164 (all manufactured by Dow Corning Toray Co., Ltd.), BYK-33 and BYK-387 (both manufactured by BYK Japan KK.), and TSF4440, TSF4452, and TSF4453 (all manufactured by Momentive Performance Materials Inc.).

A fluorosurfactant in which the number of carbon atoms replaced with fluorine atoms is from 2 to 16 is preferable and, 4 to 16, more preferable.

Specific examples of the fluorosurfactants include, but are not limited to, perfluoroalkyl phosphoric acid ester compounds, adducts of perfluoroalkyl ethylene oxide, and polyoxyalkylene ether polymer compounds having a perfluoroalkyl ether group in its side chain. Of these, polyoxyalkylene ether polymer compounds having a perfluoroalkyl ether group in its side chain are preferable because they do not foam easily and the fluorosurfactant represented by the following Chemical formula F-1 or Chemical formula F-2 is more preferable.

CF₃CF₂(CF₂CF₂)ₘ-CH₂CH₂O(CH₂CH₂O)ₙH Chemical formula F-1

In the Chemical formula F-1, "m" is preferably 0 or an integer of from 1 to 10 and "n" is preferably 0 or an integer of from 1 to 40.

CₙF₂ₙ₊₁-CH₂CH(OH)CH₂-O-(CH₂CH₂O)ₐ-Y Chemical formula F-2

In the Chemical formula F-2, Y represents H, CₙF₂ₙ₊₁, where "n" is an integer of from 1 to 6, H₂CH(OH)CH₂-CₙF₂ₙ₊₁, where n represents an integer of from 4 to 6, or CₚH_{2p+ 1}, where p represents an integer of from 1 to 19. "a" represents an integer of from 4 to 14.

Products available on the market may be used as the fluorosurfactant.

Specific examples of the products available on the market include, but are not limited to, SURFLON S-111, SURFLON S-112, SURFLON S-121, SURFLON S-131, SURFLON S-132, SURFLON S-141, and SURFLON S-145 (all manufactured by ASAHI GLASS CO., LTD.); FLUORAD FC-93, FC-95, FC-98, FC-129, FC-135, FC-170C, FC-430, and FC-431 (all manufactured by SUMITOMO 3M); MEGAFACE F-470, F-1405, and F-474 (all manufactured by DIC CORPORATION); ZONYL™ TBS, FSP, FSA, FSN-100, FSN, FSO-100, FSO, FS-300, UR, CAPSTONE® FS-30, FS-31, FS-3100, FS-34, FS-35 (all manufactured by The Chemours Company); FT-110, FT-250, FT-251, FT-400S, FT-150, and FT-400SW (all manufactured by NEOS COMPANY LIMITED); POLYFOX PF-136A, PF-156A, PF-151N, PF-154, PF-159 (manufactured by OMNOVA SOLUTIONS INC.), and UNIDYNE DSN-403N (manufactured by DAIKIN INDUSTRIES). Of these, FS-300, FS-34, FS-300 (all manufactured by The Chemours Company) and FT-110, FT-250, FT-251, FT-400S, FT-150, and FT-400SW (all manufactured by NEOS COMPANY LIMITED), PolyFox PF-151N (manufactured by OMNOVA SOLUTIONS INC.), and UNIDYNE DSN-403N (manufactured by DAIKIN INDUSTRIES) are particularly preferable in terms of good printing quality, coloring in particular, and improvement on permeation, wettability, and uniform dying property to paper.

The proportion of the surfactant in ink is not particularly limited. It is preferably from 0.001 to 5 percent by mass and more preferably from 0.05 to 5 percent by mass ink in terms of excellent wettability and discharging stability and improvement on image quality.

### <Other Components>

The curable composition of the present disclosure optionally contains other known components. The other known components are not particularly limited. Specific examples thereof include, but are not limited to, known articles such as surfactants, polymerization inhibitors, leveling agents, defoaming agents, fluorescent brighteners, permeation enhancing agents, wetting agents (humectants), fixing agents, viscosity stabilizers, fungicides, preservatives, antioxidants, ultraviolet absorbents, chelate agents, pH adjusters, (regulators), and thickeners.

### <Defoaming Agent>

The defoaming agent has no particular limit. For example, silicone-based defoaming agents, polyether-based defoaming agents, and aliphatic acid ester-based defoaming agents are suitable. These can be used alone or in combination. Of these, silicone-based defoaming agents are preferable to easily break foams.

### <Preservatives and Fungicides>

The preservatives and fungicides are not particularly limited. A specific example is 1,2-benzisothiazolin-3-on.

### <Corrosion Inhibitor>

The corrosion inhibitor has no particular limit. Examples thereof are acid sulfite and sodium thiosulfate.

### <Curing Means>

The curable ink in accordance with some embodiments of the present invention comprises a curable composition. Preferably, the curable composition is cured by application of heat or irradiation with an active energy ray, and the latter is more preferable.

Specific examples of the active energy ray for curing the curable composition include, but are not limited to, electron beams, α-rays, β-rays, γ-rays, and X-rays, in addition to ultraviolet rays. When a light source having a particularly high energy is used, polymerization reaction can be allowed to proceed without a polymerization initiator. In addition, in the case of irradiation with ultraviolet ray, mercury-free is preferred in terms of protection of environment. Therefore, replacement with GaN-based semiconductor ultraviolet light-emitting devices is preferred from industrial and environmental point of view. Furthermore, ultraviolet light-emitting diode (UV-LED) and ultraviolet laser diode (UV-LD) are preferable as an ultraviolet light source. Small sizes, long time working life, high efficiency, and high cost performance make such irradiation sources desirable.

In the case of irradiation with electronic beams, a low-acceleration voltage type (from 80 kV to 120 kV) that is effective for curing of ink is preferable, and the irradiation is preferably performed in a nitrogen atmosphere. A specific example of a device is, for example, EZCure (easy cure) series manufactured by IWASAKI ELECTRIC CO., LTD.

A cumulative energy amount of active energy rays (cumulative light amount) is preferably from 300 mJ/cm² to 1000 mJ/cm².

In the case of irradiation with ultraviolet rays, a cumulative light amount in one pass of UV-A in the step of irradiation of ultraviolet rays is preferably 80 mJ/cm² or higher but 450 mJ/cm² or lower, and the total cumulative light amount is preferably from 300 mJ/cm² to 1000 mJ/cm². When the cumulative light amount in one pass is 80 mJ/cm² or higher, curing is sufficiently performed, resulting in favorable scratch resistance. When the cumulative light amount in one pass is 450 mJ/cm² or lower, damage to a substrate can be reduced, resulting in neither deformation nor crack formation in the substrate.

### <Preparation of Active-Energy-Ray Curable Composition>

The active-energy-ray curable composition of the present disclosure can be prepared by using the components described above. The preparation devices and conditions are not particularly limited. For example, the active-energy-ray curable composition can be prepared by subjecting a polymerizable monomer, a pigment, a dispersant, etc., to a dispersion treatment using a dispersing machine such as a ball mill, a kitty mill, a disk mill, a pin mill, and a DYNO-MILL to prepare a pigment liquid dispersion, and further mixing the pigment liquid dispersion with a polymerizable monomer, an initiator, a polymerization inhibitor, and a surfactant.

### <Viscosity>

The viscosity of the active-energy-ray curable composition of the present disclosure has no particular limit because it can be adjusted depending on the purpose and application devices. For example, if an ejecting device that ejects the composition from nozzles is employed, the viscosity thereof is preferably in the range of 3 mPa·s to 40 mPa· s, more preferably 5 mPa·s to 15 mPa·s, and particularly preferably 6 mPa·s to 12 mPa·s in the temperature range of 20 degrees C to 65 degrees C, preferably at 25 degrees C. In addition, it is particularly preferable to satisfy this viscosity range by the composition free of the organic solvent described above. Incidentally, the viscosity can be measured by a cone plate rotary viscometer (VISCOMETER TVE-22L, manufactured by TOKI SANGYO CO., LTD.) using a cone rotor (1°34' x R24) at a number of rotation of 50 rpm with a setting of the temperature of hemathermal circulating water in the range of 20 degrees C to 65 degrees C. VISCOMATE VM-150III can be used for the temperature adjustment of the circulating water.

### <Application Field>

The application field of the active-energy-ray curable composition of the present disclosure is not particularly limited. It can be applied to any field where active-energy-ray curable compositions are used. For example, the active-energy-ray curable composition is selected to a particular application and used for a resin for processing, a paint, an adhesive, an insulant, a release agent, a coating material, a sealing material, various resists, and various optical materials.

Furthermore, the active-energy-ray curable composition of the present disclosure can be used as an ink to form two-dimensional texts, images, and designed coating film on various substrates and in addition as a solid object forming material to form a three-dimensional object. This three dimensional object forming material may also be used as a binder for powder particles used in a powder layer laminating method of forming a three-dimensional object by repeating curing and layer-forming of powder layers.

An apparatus for fabricating a three-dimensional object by the active-energy-ray curable composition of the present disclosure is not particularly limited and can be a known apparatus. For example, the apparatus includes a containing device, a supplying device, and a discharging device of the active-energy-ray curable composition, and an active energy ray irradiator.

In addition, the present disclosure includes cured materials obtained by curing the curable composition and processed products obtained by processing structures having the cured materials on a substrate. The processed product is fabricated by, for example, heat-drawing and punching a cured material or structure having a sheet-like form or film-like form. Examples thereof are gauges or operation panels of vehicles, office machines, electric and electronic machines, and cameras.

The substrate is not particularly limited. It can suitably be selected to a particular application. Examples thereof include paper, thread, fiber, fabrics, leather, metal, plastic, glass, wood, ceramic, or composite materials thereof. Of these, plastic substrates are preferred in terms of processability.

### <Print Medium>

The print medium for use in printing is not particularly limited. Specific examples thereof include, but are not limited to, plain paper, gloss paper, special paper, cloth, film, transparent sheets, printing paper for general purpose.

### <Composition Stored Container>

The composition stored container of the present disclosure contains the active-energy-ray curable composition and is suitable for the applications as described above. For example, if the active-energy-ray curable composition of the present disclosure is used for ink, a container that stores the ink can be used as an ink cartridge or an ink bottle. Therefore, users can avoid direct contact with the ink during operations such as transfer or replacement of the ink, so that fingers and clothes are prevented from contamination. Furthermore, inclusion of foreign matters such as dust in the ink can be prevented. In addition, the container can be of any size, any form, and any material. For example, the container can be designed to a particular application. It is preferable to use a light blocking material to block the light or cover a container with a light blocking sheet, etc.

### <Inkjet Printing Method and Printing Apparatus>

An inkjet printing method of the present disclosure includes: an ink discharging step of discharging an ink onto a print medium, where the ink contains a polymerizable group-containing dispersion and a polymerization initiator; after the ink discharging step, an active-energy-ray irradiating step of irradiating the ink with active energy rays, where the ink is discharged on the print medium; and after the active-energy-ray irradiating step, a drying step of drying the ink with heat, where the ink is irradiated with the active energy rays; and if necessary, further includes other steps.

The active-energy-ray irradiating step is a step of irradiating ultraviolet rays, and the cumulative light amount of the active energy rays is preferably from 300 mJ/cm² to 1000 mJ/cm².

Within a period of from 0.2 sec to 1.0 sec after the ink discharging step, the active-energy-ray irradiating step and then the drying step are preferably performed.

A method for curing the ink of the present disclosure with active energy rays includes an irradiation step of irradiating active energy rays An inkjet printing apparatus of the present disclosure includes: an ink discharging unit configured to discharge an ink onto a print medium, where the ink contains a polymerizable group-containing dispersion and a polymerization initiator; an active-energy-ray irradiator configured to irradiate the ink with active energy rays, where the ink is discharged on the print medium; and a drying unit configured to dry the ink with heat, where the ink is irradiated with the active energy rays; and if necessary further includes other units.

The active-energy-ray irradiator is preferably an ultraviolet ray irradiator configured to emit ultraviolet rays.

The inkjet printing apparatus of the present disclosure includes a storing part configured to store an ink. The storing part may include the container mentioned above. The method of discharging the ink is not particularly limited, and examples thereof include a continuous jetting method and an on-demand method. The on-demand method includes a piezo method, a thermal method, an electrostatic method, etc.

FIG. 1 is a diagram illustrating an image forming apparatus equipped with an inkjet discharging device. Printing units 23a, 23b, 23c, and 23d respectively having ink cartridges and discharging heads for yellow, magenta, cyan, and black curable inks discharge the inks onto a recording medium 22 fed from a supplying roller 21. Thereafter, light sources 24a, 24b, 24c, and 24d configured to cure the inks emit active energy rays to the inks, thereby curing the inks to form a color image. Thereafter, after dried with heat by a drying unit 27, the recording medium 22 is conveyed to a processing unit 25 and a printed matter reeling roll 26.

In the apparatus illustrated in FIG. 1, the drying unit 27 is disposed upstream of the printed matter reeling roll 26. However, the drying unit may be disposed downstream of the light sources 24a, 24b, 24c, and 24d.

In curing the inks with the above ultraviolet ray irradiation, when the ingredients in the ink aggregate while incorporating the pigment, the resultant aggregates may precipitate in the ink to form a state where the aggregates and the liquid (solvent and/or water) are separated from each other (hereinafter this state is referred to as "solid-liquid separation"). In this case, by performing drying with heat after reducing the liquid rather than immediately after the curing with ultraviolet rays, it is possible to reduce the amount of heat required for drying to reduce power consumption.

Each of the printing units 23a, 23b, 23c and 23d may have a heating mechanism to liquidize the ink at the ink discharging portion. Moreover, in another embodiment of the present disclosure, a mechanism may optionally be included to cool down the print medium to around room temperature in a contact or non-contact manner. In addition, the inkjet recording method may be either of serial methods or line methods. The serial methods include discharging an ink onto a print medium by moving the head while the print medium intermittently moves according to the width of a discharging head. The line methods include discharging an ink onto a print medium from a discharging head held at a fixed position while the print medium continuously moves.

The print medium 22 is not particularly limited. Specific examples thereof include, but are not limited to, paper, film, ceramics, glass, metal, or composite materials thereof, each of which may be in the form of a sheet. The image forming apparatus may have a one-side printing configuration and/or a two-side printing configuration. The print medium is not limited to articles used as typical print media. Examples of articles usable as the print medium include cardboard, building materials (such as wall paper and floor material), concrete, cloth for apparel (such as T-shirts), textile, and leather.

Optionally, multiple colors can be printed with no or weak active energy ray from the light sources 24a, 24b, and 24c followed by irradiation of the active energy ray from the light source 24d. As a result, energy and cost can be saved.

The printed matter having images printed with the ink of the present disclosure includes articles having printed images or texts on a plain surface of conventional paper, resin film, etc., a rough surface, or a surface made of various materials such as metal or ceramic. In addition, by laminating layers of images in part or the entire of a print medium, a partially stereoscopic image (formed of two dimensional part and three-dimensional part) and a three dimensional objects can be fabricated.

Manners of the drying with heat are uses of, for example, hot air, a halogen heater, a ceramic heater, and a heat drum. Any manner to give heat to a substrate may be used, but it is preferable to employ a manner to blow hot air because of less damage to the substrate. The temperature of hot air is a temperature of from 80 degrees C to 150 degrees C. The volume of the air and the period of the drying are appropriately adjusted depending on, for example, the number of nozzles of the hot air. Preferably, the period of the drying is in the range of from 100 msec to 2000 msec at an air volume of 20 m³/min. In the case of a halogen heater, the halogen heater is preferably used at a wavelength of from 1 µm to 5 µm and for an irradiation period of from 0.1 to 2 sec. When the drying is too insufficient, the image is insufficiently dried and faded away during rubbing. When it is too sufficient, the substrate is greatly damaged to potentially cause deformation and form cracks.

### <Printed matter>

An ink printed matter of the present disclosure includes a print medium and an image formed on the print medium by the inkjet printing method of the present disclosure.

The printed matter can be formed through printing by the inkjet printing apparatus and the inkjet printing method.

In the terminology of the present disclosure, image forming, recording, printing, etc. in the present disclosure represent the same meaning.

A print medium, media, and printed matter represent same meaning.

### Examples

The present disclosure will be describe by way of Examples. However, the present disclosure should not be construed as being limited to these Examples.

### -Preparation Examples of cyan pigment dispersion liquid-

The interior of a 1 L-flask equipped with a mechanical stirrer, a thermometer, a nitrogen gas introducing tube, a reflux tube, and a dropping funnel was thoroughly replaced with nitrogen gas. The flask was charged with 11.2 parts by mass of styrene, 2.8 parts by mass of acrylic acid, 12.0 parts by mass of lauryl methacrylate, 4.0 parts by mass of polyethylene glycol methacrylate, 4.0 parts by mass of styrene macromer, and 0.4 parts by mass of mercaptoethanol, followed by mixing and then heating to 65 degrees C.

Next, 100.8 parts by mass of styrene, 25.2 parts by mass of acrylic acid, 108.0 parts by mass of lauryl methacrylate, 36.0 parts by mass of polyethylene glycol methacrylate, 60.0 parts by mass of hydroxylethyl methacrylate, 36.0 parts by mass of styrene macromere, 3.6 parts by mass of mercaptoethanol, 2.4 parts by mass of azobismethylvaleronitrile, and 18 parts by mass of methyl ethyl ketone were mixed to prepare a mixed solution. The thus-prepared mixed solution was added dropwise to the flask over 2.5 hours. After completion of the addition, a mixed solution containing 0.8 parts by mass of azobismethylvaleronitrile and 18 parts by mass of methyl ethyl ketone was added dropwise to the flask over 0.5 hours. After aging at 65 degrees C for 1 hour, 0.8 parts by mass of azobismethylvaleronitrile was added, followed by aging for another 1 hour. After completion of reaction, 364 parts by mass of methyl ethyl ketone was added to the flask to obtain 800 parts by mass of polymer solution A having a concentration of 50% by mass.

Next, 28 parts by mass of the obtained polymer solution A, 26 parts by mass of a phthalocyanine pigment (Dainichiseika Color & Chemicals Mfg. Co., Ltd., CHROMOFINE BLUE A-220JC), 13.6 parts by mass of a 1 mol/L aqueous potassium hydroxide solution, 20 parts by mass of methyl ethyl ketone, and 13.6 parts by mass of ion-exchanged water were thoroughly stirred and then kneaded with a roll mill to obtain a paste. The obtained paste was charged into 200 parts by mass of pure water, followed by thoroughly stirring. Thereafter, an evaporator was used to distill off the methyl ethyl ketone and the water. Further, in order to remove coarse particles, the resultant dispersion liquid was subjected to pressure filtration with a polyvinylidene fluoride membrane filter having an average pore diameter of 5.0 µm, to obtain a pigment-containing polymer particle dispersion liquid containing 15% by mass of the pigment and 20% by mass of the solid portions. The polymer particles in the obtained pigment dispersion liquid was measured for an average particle diameter (D₅₀). The average particle diameter (D₅₀) measured with a particle distribution analyzer (obtained from Nikkiso Co., Ltd., NANOTRAC UPA-EX150) was 56.0 nm.

### -Preparation of Inkjet Ink 1-

A water-soluble organic solvent (wetting agent) given in Table 1 below and water were mixed and stirred for 1 hour to be homogeneous. A polymerizable material (a reactive group-containing dispersion, a polymerizable monomer) was added to the resultant mixture, followed by stirring for 1 hour. The pigment dispersion liquid, a polymerization initiator, a surfactant, a urethane emulsion, and a pH regulator were added to the resultant mixture, followed by stirring for 1 hour. The resultant dispersion liquid was subjected to pressure filtration with a polyvinylidene fluoride membrane filter having an average pore diameter of 5.0 µm to remove coarse particles and dusts, whereby Inkjet Ink 1 was prepared. The unit "%" in Table 1 is "% by mass".

### -Preparation of Inkjet Inks 2 to 9-

Inkjet Inks 2 to 9 were obtained in the same manner as in Example 1 except that the formulation in Example 1 was changed to the respective formulations presented in Table 1.

The contents of the urethane dispersion, emulsion, and pigment dispersion in Table 1 are contents on the basis of solid portions thereof.

### (Examples 1-1 to 1-8 and Comparative Examples 1-1 to 1-6)

Next, the obtained Inkjet Inks 1 to 9 were used to produce cured products in the following manner, and were measured and evaluated for "beading resistance" and "scratch resistance". Results are presented in Table 2.

### (Examples 2-1 to 2-13 and Comparative Examples 2-1 to 2-7)

Next, the obtained Inkjet Inks 1 to 9 were used to produce cured products in the following manner under the conditions presented in Table 3, and were measured and evaluated for "beading resistance" and "scratch resistance". Results are presented in Table 3.

**Table 1**

| | Ink ingredients | Examples | | | | | Comparative Examples | | | |
|---|---|---|---|---|---|---|---|---|---|---|
| | | 1 | 2 | 3 | 4 | 5 | 1 | 2 | 3 | 4 |
| | | Ink 1 | Ink 2 | Ink 3 | Ink 4 | Ink 5 | Ink 6 | Ink 7 | Ink 8 | Ink 9 |
| Polymerization initiator | 2-hydroxy-2-methyl-1-phenylpropanone | 1.0 | 1.0 | 1.0 | | 1.0 | 1.0 | 1.0 | 1.0 | |
| | OMNIRAD 819 DW | | | | 2.2 | | | | | |
| Solvent | 1,2-propanediol | 5.0 | 5.0 | 5.0 | 5.0 | 10.0 | 5.0 | 5.0 | 5.0 | 5.0 |
| Solvent Surfactant | 1,3-butanediol | 10.0 | 10.0 | 10.0 | 10.0 | 20.0 | 10.0 | 10.0 | 10.0 | 10.0 |
| | glycerin | 15.0 | 15.0 | 5.0 | 15.0 | 15.0 | 15.0 | 15.0 | 15.0 | 15.0 |
| | SURFYNOL 440 | 1.0 | 1.0 | 1.0 | 1.0 | 1.0 | 1.0 | 1.0 | 1.0 | 1.0 |
| Pigment | Cyan pigment dispersion | 1.8 | 1.8 | 1.8 | 1.8 | 1.8 | 1.8 | 1.8 | 1.8 | 1.8 |
| Reactive urethane dispersion | LAROMER LR8983 | 8.0 | | 8.0 | 8.0 | 5.0 | | | | 8.0 |
| Reactive urethane dispersion Urethane emulsion | UCECOAT 7571 | | 8.0 | | | | | | | |
| | PERMARINUA-3945 | | | | | | | 8.0 | | |
| Monomer | 4-hydroxybutyl acrylate | | | 7.0 | | | 7.0 | | | |
| pH regulator | 2-mnino-2-ethyl-1,S-propanediol | 0.2 | 0.2 | | 0.2 | 0.2 | 0.2 | 0.2 | 0.2 | 0.2 |
| water | | 58.0 | 58.0 | 61.2 | 56.8 | 46.0 | 59.0 | 58.0 | 66.0 | 59.0 |
| total | | 100.0 | 100.0 | 100.0 | 100.0 | 100.0 | 100.0 | 100.0 | 100.0 | 100.0 |

The units of the numerical values of the ink ingredients are % by mass.

**Table 2**

| | Ink No. | Number of passes | Conditions | | | | | Evaluations | |
|---|---|---|---|---|---|---|---|---|---|
| | | | UV irradiation | UV-A cumulative light amount mJ/cm² | Heat drying | Additional UV irradiation | UV-A cumulative light amount mJ/cm² | Beading resistance | Scratch resistance |
| Ex. 1-1 | 1 | 2 | performed | 317 | performed | - | - | A | A |
| Ex. 1-2 | 2 | 2 | performed | 317 | performed | - | - | A | A |
| Ex. 1-3 | 3 | 2 | performed | 317 | performed | - | - | A | A |
| Ex. 1-4 | 4 | 2 | performed | 317 | performed | - | - | B | A |
| Ex. 1-5 | 5 | 2 | performed | 317 | performed | - | - | B | A |
| Ex. 1-6 | 1 | 2 | performed | 215 | performed | - | - | A | A |
| Ex. 1-7 | 1 | 4 | performed | 635 | performed | - | - | A | A |
| Ex. 1-8 | 1 | 8 | performed | 1278 | performed | - | - | A | A |
| Comp. Ex. 1-1 | 6 | 2 | performed | 317 | performed | - | - | B | B |
| Comp. Ex. 1-2 | 7 | 2 | performed | 317 | performed | - | - | C | B |
| Comp. Ex. 1-3 | 8 | 2 | performed | 317 | performed | - | - | C | B |
| Comp. Ex. 1-4 | 9 | 2 | performed | 317 | performed | - | - | C | B |
| Comp. Ex. 1-5 | 1 | 2 | - | - | performed | performed | 500 | C | A |
| Comp. Ex. 1-6 | 3 | 2 | - | - | performed | performed | 500 | C | A |

**Table 3**

| | Ink No. | Number of passes | UV-A 1 pass cumulative light amount (mJ/cm²) | Head-Lamp distance (mm) | Speed (mm/sec) | Time (sec) | Heat drying after printing | Evaluations | | |
|---|---|---|---|---|---|---|---|---|---|---|
| | | | | | | | | Beading resistance | Scratch resistance | Offset property |
| Ex. 2-1 | 1 | 2 | 124.0 | 180 | 846 | 0.213 | performed | A | A | A |
| Ex. 2-2 | 1 | 2 | 124.0 | 380 | 846 | 0.449 | performed | A | A | A |
| Ex. 2-3 | 1 | 2 | 87.4 | 180 | 1200 | 0.150 | performed | A | A | A |
| Ex. 2-4 | 1 | 2 | 249.8 | 380 | 420 | 0.905 | performed | A | A | A |
| Ex. 2-5 | 1 | 2 | 124.0 | 380 | 846 | 0.449 | performed | A | A | A |
| Ex. 2-6 | 2 | 2 | 124.0 | 380 | 846 | 0.449 | performed | A | A | A |
| Ex. 2-7 | 3 | 2 | 124.0 | 380 | 846 | 0.449 | performed | A | A | A |
| Ex. 2-8 | 4 | 2 | 124.0 | 380 | 846 | 0.449 | performed | B | B | A |
| Ex. 2-9 | 5 | 2 | 124.0 | 380 | 846 | 0.449 | performed | B | B | A |
| Ex. 2-10 | 1 | 2 | 124.0 | 380 | 846 | 0.449 | performed | A | A | A |
| Ex. 2-11 | 1 | 2 | 124.0 | 380 | 846 | 0.449 | performed | A | A | A |
| Ex. 2-12 | 1 | 2 | 419.6 | 180 | 250 | 0.720 | performed | A | A | A |
| Ex. 2-13 | 1 | 2 | 51.0 | 380 | 846 | 0.449 | performed | B | B | A |
| Comp. Ex. 2-1 | 1 | 2 | 69.9 | 180 | 1500 | 0.120 | performed | C | A | A |
| Comp. Ex. 2-2 | 1 | 2 | 499.5 | 380 | 210 | 1.810 | performed | C | A | A |
| Comp. Ex. 2-3 | 6 | 2 | 124.0 | 380 | 846 | 0.449 | performed | C | C | A |
| Comp. Ex. 2-4 | 7 | 2 | 124.0 | 380 | 846 | 0.449 | performed | C | C | A |
| Comp. Ex. 2-5 | 8 | 2 | 124.0 | 380 | 846 | 0.449 | performed | C | C | A |
| Comp. Ex. 2-6 | 9 | 2 | 124.0 | 380 | 846 | 0.449 | performed | C | C | A |
| Comp. Ex. 2-7 | 1 | 2 | 124.0 | 180 | 846 | 0.213 | not performed | A | A | C |

### <Printing Apparatus>

A multi-pass printing apparatus of a flat-bed type was made in which the head MH5220 obtained from Ricoh Company, Ltd. was mounted. This apparatus was used for printing of a solid image chart. Both sides of a head carriage were mounted with UV irradiator Subzero085 obtained from Integration technology, so that a printed ink could be irradiated with UV at the same time as a printing operation. Printing was performed under the conditions: a head gap of 2 mm, a discharge amount per droplet of 16 pL, 600 dpi, 2 passes, one-direction printing, and a deposition amount of 8.9 g/m². An image pattern printed was a 5 cm×20 cm solid image.

In Examples 1-1 to 1-8, Comparative Examples 1-1 to 1-4, Examples 2-1 to 2-13, and Comparative Examples 2-1 to 2-6, after UV irradiation was performed while printing, heat drying was performed for 30 sec using PRAJET (obtained from ISHIZAKI ELECTRIC MFG. CO., LTD.) 20 cm apart therefrom. In Example 1-8, deformation of the media was observed.

Comparative Examples 1-5 and 1-6 and Comparative Example 2-7, no heat drying was performed after printing.

Under surrounding conditions adjusted to 23±0.5°C and 50±5%RH, an inkjet printing apparatus was set by fluctuating the driving voltage of a piezo element so that the same amount of an ink was deposited onto a commercially available PET film (film thickness: 100 µm).

The prepared inks were subjected to an experiment of changing the time after the printing until the first UV irradiation by randomly changing the position of the filled head and the speed of the head carriage.

### <Beading Resistance>

As evaluation of beading, the presence or absence of color unevenness was determined for the 5 cm×20 cm solid image, which was formed using the multi-pass printing apparatus of a flat-bed type in which the head MH5220 obtained from Ricoh Company, Ltd. was mounted.

### [Evaluation criteria]

A: No beading was observed.
B: Beading was slightly observed but not problematic (not observable 1 m apart).
C: Beading was severely observed (observable even 1 m apart).

### <Scratch Resistance>

The following operation was performed on the 5 cm×20 cm solid image, which was formed using the multi-pass printing apparatus of a flat-bed type in which the head MH5220 obtained from Ricoh Company, Ltd. was mounted. Specifically, the cured product was subjected to reciprocating friction 100 times, with the cured product, the attached white cloth cotton (*Kanakin* No. 3) for the test in compliant with JIS L 0803, and the 500 g weight being attached to the rubbing tester for color fastness RT-300 (obtained from DAIEI KAGAKU SEIKI MFG. Co., Ltd.) (a tester in compliant with the rubbing tester Type II (the type of the Japan Society for the Promotion of Science) stipulated in Test methods for color fastness to rubbing (JIS L-0849)). The concentration of the cotton cloth after the test was measured with eXact Scan (obtained from X-Rite) and was evaluated for concentration difference from cotton cloth that was not used for the test. Measurement results were evaluated based on evaluation criteria below.

### [Evaluation criteria]

A: The concentration difference was 0.02 or lower.
B: The concentration difference was higher than 0.02 but was 0.2 or lower.
C: The concentration difference was higher than 0.2.

### <Offset property>

After printing of the 5 cm×20 cm solid image using the multi-pass printing apparatus of a flat-bed type in which the head MH5220 obtained from Ricoh Company, Ltd. was mounted, samples were prepared, some of which had been subjected to heat drying for 30 sec using PRAJET (obtained from ISHIZAKI ELECTRIC MFG. CO., LTD.) 20 cm apart therefrom and others had not been subjected to the heat drying. Thereafter, a non-printed PET film was closely attached on the printed PET film, followed by placing the 100 g weight thereon. After one minute, whether color transfer occurred was visually confirmed.

### [Evaluation criteria]

A: No transfer occurred.
B: Transfer occurred.

Details of the ingredients given in Table 1 are as follows.
- 2-hydroxy-2-methyl-1-phenylpropanone: hydroxyacetophenone-based water-soluble polymerization initiator
- OMNIRAD 819 DW: aqueous dispersion liquid of bisacylphosphine oxide-based polymerization initiator (obtained from IGM Resins)
- SURFYNOL 440: nonionic surfactant
- LAROMER LR 8949: reactive urethane dispersion (solid portion content: 37.1%, obtained from BASF)
- UCECOAT 7571: reactive urethane dispersion (solid portion content: 34.6%, obtained from DAICEL-ALLNEX LTD.)
- PERMARIN UA-3945: urethane emulsion (obtained from SANYO CHEMICAL INDUSTRIES, LTD.)
- SURFYNOL 440: surfactant (obtained from Nissin Chemical Co., Ltd.)

Aspects of the present disclosure are, for example, as follows.
<1> An inkjet printing method including:
   discharging an ink onto a print medium, where the ink contains a polymerizable group-containing dispersion and a polymerization initiator;
   after the discharging, irradiating the ink with active energy rays, where the ink is discharged on the print medium; and
   after the irradiating, drying the ink with heat, where the ink is irradiated with the active energy rays.
<2> The inkjet printing method according to <1>, wherein the irradiating is irradiating ultraviolet rays, and
   wherein a cumulative light amount of the active energy rays is from 300 mJ/cm² to 1000 mJ/cm².
<3> The inkjet printing method according to <1> or <2>, wherein within a period of from 0.2 sec to 1.0 sec after the discharging, the irradiating and then the drying are performed.
<4> The inkjet printing method according to any one of <1> to <3>, wherein the polymerizable group is at least one selected from the group consisting of an acrylate group and a methacrylate group.
<5> The inkjet printing method according to <4>, wherein the irradiating is irradiating ultraviolet rays,
   wherein the ultraviolet rays are UV-A, and
   wherein a cumulative light amount in one pass of the UV-A is from 80 mJ/cm² to 450 mJ/cm².
<6> The inkjet printing method according to any one of <1> to <5>, wherein the ink contains water in an amount of 40% by mass or higher but 70% by mass or lower.
<7> The inkjet printing method according to any one of <1> to <6>, wherein the polymerizable group-containing dispersion is a urethane dispersion.
<8> An inkjet printing apparatus including:
   an ink discharging unit configured to discharge an ink onto a print medium, where the ink contains a polymerizable group-containing dispersion and a polymerization initiator;
   an active-energy-ray irradiator configured to irradiate the ink with active energy rays, where the ink is discharged on the print medium; and
   a drying unit configured to dry the ink with heat, where the ink is irradiated with the active energy rays.
<9> The inkjet printing apparatus according to <8>, wherein the active-energy-ray irradiator is an ultraviolet ray irradiator configured to emit ultraviolet rays.

## Claims

1. An inkjet printing method comprising:
discharging an ink onto a print medium, where the ink comprises a polymerizable group-containing dispersion and a polymerization initiator;
after the discharging, irradiating the ink with active energy rays, where the ink is discharged on the print medium; and
after the irradiating, drying the ink with heat, where the ink is irradiated with the active energy rays.

2. The inkjet printing method according to claim 1, wherein the irradiating is irradiating ultraviolet rays, and
wherein a cumulative light amount of the active energy rays is from 300 mJ/cm² to 1000 mJ/cm².

3. The inkjet printing method according to claim 1 or 2, wherein within a period of from 0.2 sec to 1.0 sec after the discharging, the irradiating and then the drying are performed.

4. The inkjet printing method according to any one of claims 1 to 3, wherein the polymerizable group is at least one selected from the group consisting of an acrylate group and a methacrylate group.

5. The inkjet printing method according to claim 4, wherein the irradiating is irradiating ultraviolet rays,
wherein the ultraviolet rays are UV-A, and
wherein a cumulative light amount in one pass of the UV-A is from 80 mJ/cm² to 450 mJ/cm².

6. The inkjet printing method according to any one of claims 1 to 5, wherein the ink comprises water in an amount of 40% by mass or higher but 70% by mass or lower.

7. The inkjet printing method according to any one of claims 1 to 6, wherein the polymerizable group-containing dispersion is a urethane dispersion.

8. An inkjet printing apparatus comprising:
an ink discharging unit configured to discharge an ink onto a print medium, where the ink comprises a polymerizable group-containing dispersion and a polymerization initiator;
an active-energy-ray irradiator configured to irradiate the ink with active energy rays, where the ink is discharged on the print medium; and
a drying unit configured to dry the ink with heat, where the ink is irradiated with the active energy rays.

9. The inkjet printing apparatus according to claim 8, wherein the active-energy-ray irradiator is an ultraviolet ray irradiator configured to emit ultraviolet rays.
